(19) Europäisches Patentamt
European Patent Office
Office européen des brevets

(11) **EP 1 407 214 B1**

(12) **FASCICULE DE BREVET EUROPEEN**

(45) Date de publication et mention
de la délivrance du brevet:
**01.07.2009   Bulletin 2009/27**

(51) Int Cl.:
***F41G 1/00*** *(2006.01)*

(21) Numéro de dépôt: **02738206.8**

(22) Date de dépôt: **29.04.2002**

(86) Numéro de dépôt international:
**PCT/FR2002/001478**

(87) Numéro de publication internationale:
**WO 2002/088616 (07.11.2002 Gazette 2002/45)**

(54) **DISPOSITIF, ET PROCEDE ASSOCIE, APTE A DETERMINER LA DIRECTION D'UNE CIBLE**

VORRICHTUNG UND DAZUGEHÖRIGES VERFAHREN ZUM BESTIMMEN DER RICHTUNG EINES ZIELES

DEVICE, AND RELATED METHOD, FOR DETERMINING THE DIRECTION OF A TARGET

(84) Etats contractants désignés:
**AT BE CH CY DE DK ES FI FR GB GR IE IT LI LU MC NL PT SE TR**

(30) Priorité:  **27.04.2001  FR 0105768**

(43) Date de publication de la demande:
**14.04.2004   Bulletin 2004/16**

(73) Titulaire: **Sofresud**
**83500 La Seyne sur Mer (FR)**

(72) Inventeurs:
• **SANDOZ, Stéphane**
**F-83500 La Seyne sur Mer (FR)**
• **ALHADEF, Bernard**
**F-83500 La Seyne sur Mer (FR)**

(74) Mandataire: **Breese, Pierre**
**NOVAGRAAF IP**
**3, avenue de l'Opéra**
**75001 Paris (FR)**

(56) Documents cités:
**EP-A- 0 229 864      EP-A- 0 484 202**
**EP-A- 0 496 172      EP-A- 0 502 770**
**EP-A- 0 502 771      EP-A- 0 557 591**
**EP-A- 0 717 264      WO-A-98/31985**
**FR-A- 2 536 936      US-A- 4 012 989**

## Description

La présente invention concerne le domaine des appareils de visée ou de pointage. Elle a plus particulièrement pour objet un dispositif mobile apte à déterminer des éléments de position, de cinématique et d'identification d'une cible dans un repère prédéfini ou géographique, dispositif du type comportant des moyens de visée et des moyens de traitement de signaux issus des moyens de visée. Ces moyens de traitement étant aptes à déterminer des éléments de position, de cinématique et d'identification de la cible et à les transmettre à des moyens extérieurs.

Il existe de nombreux dispositifs aptes à déterminer notamment le site et l'azimut d'une cible.

On peut, à ce titre citer le brevet EP5575591 qui décrit un dispositif apte à déterminer l'orientation d'un corps par rapport à une orientation de référence, et comprend une unité d'orientation mobile et une unité de capteurs de références, chacune d'entre elles comportant une unité gyroscopique à trois axes, une unité de calcul recevant les valeurs de mesures des unités précitées, et une unité de sortie.

Cependant une grande partie de ces dispositifs nécessite une logistique importante. Or, dans certaines circonstances, il peut s'avérer nécessaire, voire vital d'utiliser un dispositif léger et maniable utilisable par un seul opérateur.

De tels dispositifs existent et mettent en oeuvre des capteurs de champ magnétique.

Parmi ces dispositifs, des jumelles, vendues sous la marque LEICA, qui utilisent des capteurs magnétiques et un télémètre actif, sont aptes à déterminer le site et l'azimut d'une cible et donnent satisfaction lorsqu'elles sont utilisées en espace libre. Par contre leur utilisation souffre de certaines limitations rédhibitoires pour des usages spécifiques : elles ne sont pas utilisables dans un environnement comportant des perturbations magnétiques et d'autre part la rapidité et la précision des mesures sont très limitées.

D'autres dispositifs consistent à analyser des champs électrostatiques voire électromagnétiques et, par relevé de leur cartographie, à déterminer la position et la direction d'une cible.

Les dispositifs donnent satisfaction dans des environnements parfaitement connus et de petites dimensions. Ils sont cependant lourds à mettre en oeuvre et ne supportent pas de modifications de l'environnement électrique.

On connaît le brevet US4012989 qui décrit un hélicoptère comportant un dispositif de détermination de la direction d'une cible en vue de diriger un système d'arme mobile. Le dispositif de détermination de la direction d'une cible comporte un organe de visée mobile muni de deux gyroscopes inertiels intégrés, des moyens de recalage solidaires de l'hélicoptère munis de deux gyroscopes et des moyens d'asservissement de la direction de l'arme en fonction des informations fournies par les gyroscopes. Les moyens de recalage servent à bloquer les quatre gyroscopes dans une première position de référence pour définir un repère. Lorsque les moyens de visée sont dégagés des moyens de recalage, les quatre gyroscopes sont libérés. La paire de gyroscopes intégrée aux moyens de recalage tourne alors en fonction des mouvements de l'hélicoptère. La paire de gyroscopes intégrée à l'organe de visée tourne en fonction des mouvements de l'hélicoptère et des mouvements du tireur maniant l'organe de visée. L'arme est dirigée, en temps réel, en direction de la cible en fonction de la différence de rotation entre les deux paires de gyroscopes.

Ce dispositif comporte de nombreux inconvénients. Ainsi, le tireur est obligé de maintenir les moyens de visée en permanence en direction de la cible, et ce jusqu'au tir du système d'arme ce qui limite les capacités de tir et rend l'hélicoptère vulnérable en cas de présence de plusieurs cibles. Du fait des vibrations de l'hélicoptère et des mouvements du poignet incontrôlés les deux gyroscopes des moyens de visée transmettent aux moyens de traitement des successions de variations de signaux entraînant une accumulation d'erreurs de mesure qui nuit à la précision de la détermination de la direction de la cible. A bord d'un bateau, en cas de mer agitée, donc de forts tangage et roulis, l'orientation du système d'arme en direction de la cible serait-quasiment impossible avec un tel dispositif.

Le document FR 2536936 décrit un circuit générateur d'horizon, pour générer un signal vidéo destiné à représenter l'horizon dans les dispositifs de génération d'image utilisés notamment dans les simulateurs d'entraînement au tir au canon de petit calibre sur cibles simulées. Le simulateur comprend divers éléments montés sur le canon dont des capteurs de mouvement composés d'un gyromètre et deux inclinomètres qui permettent de suivre le mouvement du canon.

Ce dispositif n'apporte aucun élément contribuant à la détermination de la position d'une cible en environnement réel.

Le document EP 0484202 décrit un système pour l'alignement de la centrale inertielle d'un véhicule porté sur celle d'un véhicule porteur. Il concerne le recalage d'une centrale inertielle relativement à une seconde centrale inertielle qui lui est mécaniquement solidaire.

Cependant, ce document n'apporte aucun élément pour le recalage d'un unique trièdre gyroscopique en continu.

Le but de l'invention est de proposer un dispositif léger et maniable, apte à déterminer, précisément et rapidement, le site et l'azimut d'une cible et utilisable quel que soit le type d'environnement.

Le document WO 98/31985 décrit un dispositif apte à déterminer la direction d'une cible dans un repère prédéfini selon le préambule de la revendication 1.

Ce dispositif nécessite des moyens de recalage physiques qui s'avèrent très souvent difficiles à mettre en oeuvre et qui constituent un Inconvénient majeur pour certaines applications.

La solution proposée est un dispositif apte à déterminer la direction d'une cible dans un repère prédéfini selon la revendication 1.

Selon une caractéristique particulière avantageuse, ledit au moins un capteur est constitué par un inclinomètre deux axes ou par au moins deux inclinomètres.

Selon une autre caractéristique, ledit au moins un capteur est constitué par un accéléromètre multiaxes ou par au moins deux accéléromètres.

Selon une autre caractéristique, ledit au moins un capteur est constitué par un capteur électronique d'images. Pour son fonctionnement, le capteur électronique d'images est apte à générer un signal représentatif d'images et qui est transmis à des moyens de traitement de ce signal aptes à déterminer la position d'un motif dans lesdites images.

Selon une caractéristique additionnelle, les éléments de visée comportent un capteur électronique d'images et des moyens de traitement d'images associés permettant de compenser le « bougé » de l'opérateur, tel par exemple qu'un stabilisateur d'images.

Selon une autre caractéristique, les moyens de traitement des moyens de visée sont aptes à compenser le bougé de l'opérateur à partir de la valeur du champ optique du capteur électronique d'image.

Selon une caractéristique, les moyens de traitement des moyens de visée sont aptes à déterminer le champ angulaire du capteur électronique d'images à partir de la relation entre le bougé opérateur issu du signal du capteur électronique et celui des moyens de visée.

Selon une caractéristique additionnelle les moyens de traitement des moyens de visée sont aptes à concourir à la transmission éléments d'identification de la cible et/ou à la détection de la direction absolue des moyens de visée et éventuellement à générer, à partir des signaux du capteur électronique d'images et des moyens de visée, une image signée c'est-à-dire comportant des informations de position dans l'espace et dans le temps (horodatage, position géographique, attitude, distance du point de visée... Ces moyens de traitement peuvent aussi, à partir des images signées, reconstituer le paysage global avec les informations de position pour différentes zones de ce dernier. Ces images et/ou le paysage reconstitué peuvent ensuite être transmis à des moyens de visualisation ou à des moyens extérieurs.

Selon une autre caractéristique, le dispositif comporte des moyens d'enregistrement du signal provenant du capteur électronique d'images, et/ou qu'il comporte des moyens de visualisation desdites images ainsi que de certaines informations telles que la direction de la cible visée, sa distance et/ou sa nature.

Selon une autre caractéristique ledit au moins un capteur est constitué par au moins deux récepteurs magnétiques. Un émetteur magnétique peut être associé à ce dernier.

Selon une autre caractéristique, un dispositif selon l'invention comporte trois gyromètres optiques, par exemple à fibre optique.

Selon une autre caractéristique, un dispositif selon l'invention, les moyens de traitement comportent une source d'alimentation électrique et des moyens de calcul et de gestion d'informations mettant en oeuvre un logiciel réalisant plusieurs fonctions, ces fonctions pouvant être

- une fonction de désignation d'objectif, qui fait l'acquisition des données de l'instrument de visée et les traite afin d'obtenir le site et l'azimut désiré,

- une fonction de transmission qui envoie les données d'azimut - site pour affichage sur les moyens de visualisation et/ou à un système d'arme,

- une fonction de détection de la position absolue, qui permet de corriger régulièrement la dérive de l'instrument de visée due à l'utilisation de gyromètres

- une fonction de visualisation de l'état opérationnel des éléments de l'invention.

Selon une autre caractéristique, les moyens de visée comportent l'acquisition de la position géographique par des moyens radioélectriques de positionnement par exemple satellitaire de type GPS et peuvent comporter un télémètre actif.

Selon une autre caractéristique, les moyens de visée comportent au moins deux accéléromètres et en ce que les moyens de traitement comportent des moyens de triangulation aptes à effectuer une télémétrie discrète.

Selon une caractéristique additionnelle, les moyens de visée comportent au moins un capteur magnétique utilisé pour effectuer des compensations des erreurs fonction du champ magnétique des gyromètres utilisés et / ou pour permettre de corréler les mesures par rapport au champ magnétique terrestre.

Selon une caractéristique additionnelle, les moyens de visée comportent au moins un accéléromètre utilisé pour effectuer des compensations des erreurs fonction des accélérations des gyromètres utilisés et / ou pour permettre le calcul du déplacement des moyens de visée.

Selon une caractéristique additionnelle, les moyens de visée comportent au moins un inclinomètre utilisé pour calculer l'inclinaison des moyens de visée par rapport au champ gravitationnel terrestre et / ou corréler les mesures.

Selon une caractéristique additionnelle, les moyens de visée comportent des moyens de transmission sans fil destinés à supprimer les câbles entre les différents moyens.

Selon une caractéristique additionnelle, les moyens de traitement comportent des moyens de télécommunications destinés notamment à acheminer les informations acquises vers un centre d'opérations.

Selon une caractéristique additionnelle, les moyens de visée comportent un télémètre actif.

Selon une caractéristique additionnelle, les moyens de visée comportent un télémètre actif de type laser.

Selon une caractéristique additionnelle, les moyens de traitement comportent des moyens de triangulation pour effectuer une télémétrie discrète, cette triangulation statique pouvant s'exécuter à partir de plusieurs postes de visée.

Selon une caractéristique additionnelle, les moyens de traitement comportent des moyens de triangulation pour effectuer une télémétrie discrète, cette triangulation dynamique pouvant s'exécuter à partir d'un seul poste de visée se déplaçant suivant une cinématique connue.

Selon une caractéristique particulière une partie des moyens d'acquisition des moyens de visée peut être reportée à un autre emplacement par exemple pour des raisons de poids ou d'ergonomie. Selon une caractéristique additionnelle, les moyens de visée comportent au moins un capteur de température utilisé pour effectuer des compensations des erreurs fonction de la température des gyromètres utilisés.

Il est connu aussi que les valeurs issues de gyroscopes dérivent, notamment en temps, en température et suivant le champ magnétique, et que leur calibrage statique et dynamique est nécessaire.

Les brevets EP717264 et EP496172 décrivent des procédés partiels de correction des biais gyrométriques ainsi que les moyens de leur mise en oeuvre.

Le premier concerne la correction des biais gyrométriques sur un aéronef et le second, sur un véhicule. Dans les deux cas, le calibrage gyroscopique est effectué lorsque l'aéronef ou le véhicule est en position stationnaire.

Cependant, pour obtenir une bonne précision, il est nécessaire de compenser la dérive gyroscopique, à tout moment, et non seulement en position stationnaire.

Il est aussi connu qu'une modélisation complexe de la trajectoire des données gyroscopiques est nécessaire pour obtenir de bons résultats d'intégration. Dans ce but des moyens de traitement des signaux puissants et volumineux, donc non transportables, sont utilisés.

L'un des buts de l'invention est de proposer un procédé de traitement des signaux issus des gyroscopes donnant de bons résultats et ne nécessitant pas de moyens de traitement des signaux puissants ni de moyens mécaniques de recalage.

La solution est un procédé de recalage selon la revendication 25.

Selon une caractéristique ledit deuxième repère est un repère terrestre, ou géographique par rapport à un émetteur magnétique ou un repère géographique par rapport à un motif dont la position ne varie pas ou très peu.

Selon une caractéristique particulière, il comporte une étape de détermination d'une part de la direction d'une droite D1 parallèle à l'axe de rotation de la terre et passant par le point P où se trouvent les moyens de visée 10 à partir des signaux issus des gyroscopes et d'autre part de la direction de la verticale D2 au point P du lieu à partir des deux signaux issus dudit capteur.

Selon une caractéristique additionnelle, il comporte une étape complémentaire de détermination de la direction du nord géographique, cette direction étant obtenue par l'intersection du plan défini par les droites D1 et D2 avec le plan perpendiculaire à

Selon une autre caractéristique du procédé pour la mise en oeuvre duquel d'une part les moyens de visée comportent au moins trois capteurs, à savoir trois récepteurs magnétiques, et d'autre part le dispositif comporte un émetteur magnétique, procédé caractérisé en ce que les moyens de traitement calculent la position et l'orientation, à savoir l'attitude, des moyens de visée à partir des signaux issus des capteurs magnétiques et de la cartographie attendue du champ magnétique qui a été au préalable introduite en mémoire dans ces moyens de traitement.

Selon une autre caractéristique du procédé pour la mise en oeuvre duquel les moyens de visée comportent un capteur électronique d'image, tel une caméra fixée de façon rigide sur les moyens de visée, cette caméra génèrent un signal représentatif de l'image observée, procédé caractérisé en ce qu'il comporte une étape dans laquelle les moyens de traitement d'image sont aptes à déterminer la position d'un motif dans ladite image, la position de ce motif étant connue.

La solution est aussi un procédé de recalage d'un dispositif apte à déterminer la direction d'une cible dans un premier repère prédéfini et du type comportant des moyens de visée, comportant un organe de visée, trois gyromètres disposés selon trois axes non coplanaires, des moyens de commande, et des moyens de traitement de signaux issus des moyens de visée, ces moyens de traitement étant aptes à déterminer la direction entre les moyens de visée et la cible, procédé caractérisé en ce qu'il comporte une étape lors de laquelle les moyens de traitement déterminent la valeur du vecteur gravité soit en continu, soit à plusieurs moments $T_0$, $T_1$ ..$T_i$... $T_n$, à partir du signal provenant d'au moins un capteur non gyroscopique disposé sur les moyens de visée.

Selon une caractéristique additionnelle, il comporte une étape dans laquelle les moyens de traitement déterminent des angles K, T et R tels que :

étant donné :

- P le point de la surface de la terre où se trouve les moyens de visée.
- $R_T(X_t, Y_t, Z_t)$ un repère associé au point P et lié à la terre, l'axe $X_t$ étant l'axe horizontal Ouest-Est orienté vers l'Est. l'axe $Y_t$ horizontal Sud-Nord orienté vers le Nord et l'axe $Z_t$ l'axe vertical orienté vers le haut.

- $R_{MV}$ ($X_s$, $Y_s$, $Z_s$) un repère lié aux moyens de visée intégrant les trois gyromètres et ledit au moins un capteur non gyroscopique, les rotations successives d'un angle -K autour de $Z_t$ puis d'un angle -T autour de l'axe résultant de la rotation précédente appliquée sur l'axe $X_t$ puis d'un angle -R autour de l'axe résultant des 2 rotations précédentes, appliquée sur l'axe $Y_t$, amène le repère $R_T$ sur le repère $R_{MV}$.

Selon une caractéristique additionnelle, il comporte une première étape consistant à calculer l'expression du repère $R_T(T_i)$ dans le repère $R_{MV}(T_i)$ en lui faisant subir les rotations suivantes :

- la rotation d'un angle -$\alpha$ fonction du temps écoulé entre les instants $T_0$ et $T_i$

$$\left(\frac{\alpha}{T_i - T_0} = 15°/h\right) \text{autour de l'axe des pôles}$$

orienté du Sud vers le Nord, c'est à dire autour de l'axe de rotation de la terre et qui n'est fonction dans le repère $R_T$ ($T_0$) ou $R_T(T_i)$ que de la latitude du point P où se trouvent les moyens de visée 10,
- les rotations d'angles -K, -T, et -R décrites précédemment,
- la rotation qui résulte de l'intégration des incréments d'angles mesurés par les gyromètres.

Puis, dans une deuxième étape, à déterminer les angles K, T, et R, soit par inversion de l'égalisation des expressions calculées et des expressions mesurées du vecteur gravité, soit par minimisation d'une fonction d'erreur, avec un algorithme de recherche du minimum d'une fonction à plusieurs paramètres sur une population de données tel par exemple un algorithme du type descente du simplex, recuit simulé ou par tout autre algorithme comme, par exemple, la programmation quadratique de Karmakar, More et Toraldo,...De tels algorithme sont décrits dans le livre intitulé Numerical recipes in C - 2d Ed- W.H.Press and AI,- Cambridge University Press 1998.

Cette deuxième étape peut en outre comporter le calcul de la latitude du point P où se trouve les moyens de visée sur terre.

La solution consiste éventuellement en plus à proposer un procédé d'intégration des données gyroscopiques consistant à effectuer successivement, à partir des valeurs gyroscopiques obtenues entre un temps to et un temps t1, des premiers calculs avec une modélisation complexe ne pouvant, compte tenu de la capacité de traitement des moyens de traitement, fonctionner en temps réel mais donnant des résultats précis, puis à partir des valeurs gyroscopiques obtenues entre le temps t1 et un temps t2, des seconds calculs avec une modélisation simplifiée et capable d'être mise en oeuvre en temps réel.

Selon une autre caractéristique, le logiciel réalise, en outre, une fonction de correction de la dérive des gyromètres par modélisation de leur dérive à long terme entre des mesures successives.

Selon une autre caractéristique, le logiciel réalise, en outre, une fonction de correction de la dérive des gyromètres par modélisation du champ magnétique entre des mesures successives.

Selon une autre caractéristique, le logiciel réalise, en outre, une fonction de calibrage automatique consistant à corriger la dérive des gyromètres par modélisation de leur dérive fonction de la température entre des mesures successives.

Selon une caractéristique additionnelle, les moyens de visée comportent au moins un capteur de température utilisé pour effectuer des compensations des erreurs fonction de la température des gyromètres utilisés.

D'autres avantages et caractéristiques apparaîtront dans la description d'un mode particulier de réalisation dans le cadre d'une exploitation à bord d'un navire, mais qui pourrait également avoir lieu à terre ou à bord d'un aéronef, et au regard des figures annexées parmi lesquelles :

- la figure 1 un schéma des moyens généraux de l'invention.

- la figure 2 présente des moyens de visée selon un premier mode de réalisation de l'invention,

- la figure 3 illustre des moyens de visée selon un deuxième mode de réalisation de l'invention.

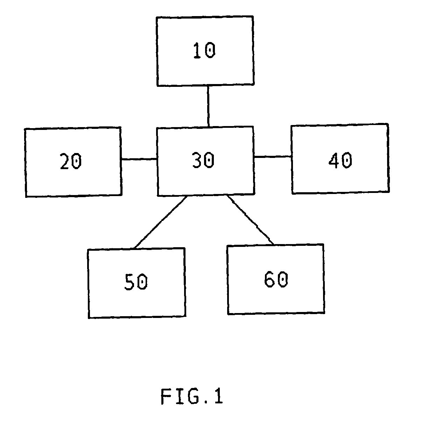

Les moyens de l'invention présentés à la figure 1 comportent des moyens de visée 10, des moyens de recalage 20, des moyens de traitement de signaux 30, des moyens de visualisation 40, des moyens extérieurs 50,60.

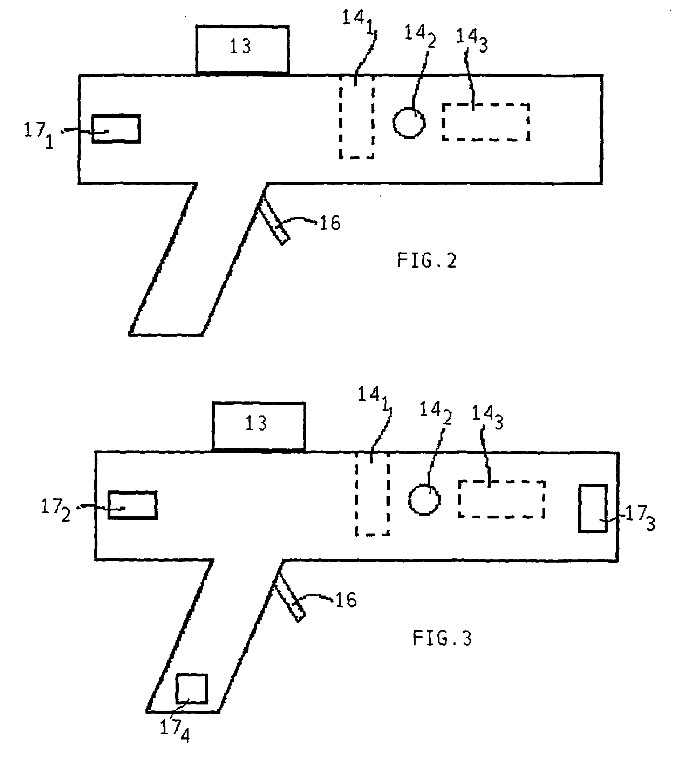

Comme montré sur la figure 2, les moyens de visée 10 comportent des moyens 11 ayant la forme d'un pistolet. Le corps 12 de ce dernier est un support de précision en matériau léger, par exemple en fibre de carbone, sur lequel sont positionnés d'une part un organe de visée 13, et d'autre part selon trois axes sensiblement perpendiculaires les uns par rapport aux autres, trois gyroscopes optiques $14_1$, $14_2$, $14_3$. D'une manière préférentielle, ces gyroscopes sont des gyromètres à fibres optiques. Ils permettent d'obtenir une grande précision des mesures, leur dérive est faible, ils supportent des mouvements rapides et peuvent être utilisés dans n'importe quel environnement.

Ces gyromètres $14_1$, $14_2$, $14_3$ donnent la vitesse de rotation autour de leur axe et permettent par intégration pas à pas au cours du temps, de déterminer la position des moyens 11.

L'organe de visée 13 est constitué par un viseur qui projette un réticule à l'infini, permettant ainsi de viser sans erreur de parallaxe.

Des orifices sont usinés dans le pistolet pour y loger les systèmes électriques et les trois gyromètres de mesure. Les plans sur lesquels ils prennent appui, et qui déterminent leur axe de rotation sont usinés afin de veiller à leur parfaite perpendicularité. Ces moyens de visée comportent en outre des moyens de commande de transmission constitués par un interrupteur 16 se présentant sous la forme d'une détente de pistolet.

Ces moyens de visée comportent en outre au moins un capteur 17 faisant partie des moyens de recalage 20. Ce capteur peut notamment être constitué par un inclinomètre deux axes, ou au moins deux inclinomètres, ou au moins deux accéléromètres, ou au moins deux récepteurs magnétiques basse fréquence ou par un capteur électronique d'image.

Les moyens de traitement 30 sont portables et comportent une source stabilisée d'alimentation électrique et des moyens de calcul et de gestion d'informations mettant en oeuvre un logiciel réalisant plusieurs fonctions.

Les moyens extérieurs comportent d'une part des moyens 50 de mesure de l'attitude (cap, roulis, tangage) du navire, en l'occurrence une centrale de navigation, et la latitude de ce dernier à la surface de la terre. Dans cet exemple de réalisation, ces informations sont transmises aux moyens de l'invention par les moyens de navigation du navire, sous forme de données directement exploitables par les moyens de calcul, moyennant une fonction de transfert pour tenir compte du positionnement de la centrale de navigation par rapport aux moyens de recalage.

Ils comportent d'autre part un système d'armes 60 dont le pointage est commandé à partir des valeurs de site et d'azimut déterminées par les moyens de l'invention et de valeurs propres au système d'armes et à son emplacement sur le navire.

Dans le cadre de l'invention, pour désigner l'objectif, et donc déterminer la direction viseur-cible, il suffit de déterminer l'attitude de l'instrument de visée.

Cette attitude peut être exprimée dans différents repères, suivant les besoins du système qui va exploiter l'information de visée.

Dans cet exemple de réalisation de l'invention, le repère considéré est un repère terrestre dont les axes sont la verticale du lieu, le nord géographique et l'est ou l'ouest géographique comme explicité ci-après dans le cadre de la fonction de recalage logarithmique réalisée par les moyens de recalage 20.

La fonction de recalage algorithmique, qui permet de corriger régulièrement la dérive de l'instrument de visée due à l'utilisation de gyromètres peut être réalisée de différentes manières.

Selon un premier mode de réalisation elle est réalisée uniquement à partir des signaux émis par trois gyroscopes $14_1$, $14_2$, $14_3$ disposés en trièdre sur les moyens de visée 10 et par un inclinomètre deux axes 17 disposé sur les moyens de visée et dont la position est connue dans ledit trièdre. La fonction de recalage est réalisée lorsque les moyens de visée 10 sont au repos. Il est à noter que cette fonction peut aussi être réalisée lorsque les moyens de visée sont déplacés selon une trajectoire quelconque comme décrit ultérieurement.

Le logiciel des moyens de traitement 30 analyse en permanence chaque signal issu de chacun des gyroscopes $14_1$, $14_2$, $14_3$ et lorsque le repos des moyens de visée est détecté, un sous programme détermine dans le repère formé par ledit trièdre, d'une part, à partir des signaux issus des gyroscopes et de façon connue, la direction d'une droite D1 parallèle à l'axe de rotation de la terre et passant par le point P où se trouvent les moyens de visée 10, et d'autre part, la direction de la verticale D2 au point P du lieu à partir des deux signaux issus de l'inclinomètre.

Par vertical au point P, il faut entendre la droite passant par ce point et par le centre terrestre géographique.

Connaissant la direction de la droite D1 parallèle à l'axe de rotation de la terre et passant par le point P ainsi que celle D2 de la verticale D2 au point P, le logiciel des moyens de traitement détermine, dans le repère formé par le trièdre, un repère terrestre invariant de recalage dans lequel l'origine est constituée par la position des moyens de visée tandis que :

- Le premier axe est constitué par la droite D2
   le deuxième axe est constitué par la droite D3 tangente au globe terrestre au point P et indiquant le nord géographique. Elle est obtenue par l'intersection du plan défini par les droites D1 et D2 avec le plan perpendiculaire à D2 et passant par P,
   le troisième axe est la droite D4 tangente au globe terrestre et perpendiculaire audit premier et second axe.

Le repère terrestre est considéré comme invariant car lors de l'utilisation des moyens de visée, leurs déplacements ne sont pas suffisamment importants pour entraîner une modification significative de la direction de la verticale.

Connaissant les directions desdits premier, deuxième et troisième axes dans le repère formé par le trièdre, le logiciel détermine, par inversion de matrice, la position du trièdre formé par les gyroscopes dans le repère terrestre, donc l'attitude des moyens de visée et défini alors les vecteurs de départ de l'intégrale qui permet, lors des déplacements des moyens de visée, de déterminer les vecteurs de position de ces derniers ainsi que son site S et son azimut A.

Selon un deuxième mode de réalisation de l'invention semblable au précédent l'inclinomètre 2 axes est remplacé par exemple par un accéléromètre trois axes ou par trois accéléromètres $17_2$, $17_3$, $17_4$, disposés en trièdre et, comme montré sur la figure 3, fixés sur les moyens de visée, leur position étant précisément connue par rapport à celle du trièdre de gyromètres.

A partir des signaux émis par le(s) accéléromètre(s), le logiciel des moyens de traitement détermine, de façon connue, la direction de la verticale D2 au point P du lieu.

Comme précédemment, le logiciel détermine, à partir des signaux issus des gyroscopes et de façon connue, la direction d'une droite D1 parallèle à l'axe de rotation de la terre puis la position du repère terrestre dans le repère formé par le trièdre de gyroscopes, puis le logiciel détermine, par inversion de matrice, la position du trièdre formé par les gyroscopes dans le repère terrestre, donc l'attitude des moyens de visée, et enfin les vecteurs de départ de l'intégrale qui permet, lors des déplacements des moyens de visée, de déterminer les vecteurs de position de ces derniers ainsi que son site S et son azimut A.

Selon une autre variante de réalisation de l'invention dans laquelle le capteur est constitué par trois accéléromètres ou par deux inclinomètres ou par des capteurs équivalents, la fonction de recalage est effectuée quelle que soit la trajectoire suivie par les moyens de visée. Pour cette raison, ce type de recalage est appelé recalage algorithmique dynamique.

En se rapportant à la figure 3, les trois gyromètres $14_1$, $14_2$, $14_3$ permettent de mesurer la rotation subie par les moyens de visée 10 entre deux instants distincts dans un repère galiléen, par exemple celui constitué par le positionnement des gyromètres $14_1$, $14_2$, $14_3$. Il est à noter que dans le cas où les moyens de visée 10 sont dans la même position ( un même point fixe par rapport à la terre) à chacun des deux instants, les gyromètres ont mesuré la rotation terrestre.

Les trois accéléromètres $17_1$, $17_2$, $17_3$ permettent de déterminer à tout instant la force de gravité, c'est à dire l'expression du vecteur « gravité » dans le repère lié aux moyens de visée 10. L'expression de ce vecteur est, par ailleurs, connue dans un repère lié à un point de la terre, ce vecteur étant vertical, orienté vers le bas et sa norme étant égale à $9,8 ms^{-2}$. Les expressions du vecteur gravité en fonction du temps dans un repère terrestre sont donc identiques.

Par contre les deux expressions du vecteur gravité d'un même point fixe de la terre à deux instincts distincts d'un même repère galiléen ne sont pas identiques, les deux vecteurs formant un angle qui dépend du temps écoulé entre les deux instants, et plus précisément de la rotation de la terre, et de la latitude du point considéré.

Le but du recalage dynamique est d'identifier l'attitude initiale des moyens de visée 10.

En utilisant la notation maritime, il s'agit de déterminer les coordonnées cap, roulis, et tangage des moyens de visée 10 à l'instant initial. Le principe mis en oeuvre exploite la constatation précédente.

Soit P, un point de la surface de la terre.

Soit $R_T(X_t, Y_t, Z_t)$ le repère associé au point P ; ce repère est lié à la terre. L'axe $X_t$ est l'axe horizontal Ouest-Est orienté vers l'Est. l'axe $Y_t$ horizontal Sud-Nord orienté vers le Nord. L'axe $Z_t$ est l'axe vertical orienté vers le haut.

Soit $R_{MV}$ ($X_s$, $Y_s$, $Z_s$) le repère lié aux moyens de visée 10 intégrant les trois gyromètres $14_1$, $14_2$, $14_3$ et les trois accéléromètres $17_1$, $17_2$, $17_3$.

A l'instant initial, le trièdre direct ($X_s$, $Y_s$, $Z_s$) est tel que les rotations successives :

- d'un angle -K ( K : valeur du cap) autour de $Z_t$

- puis d'un angle -T ( T : valeur du tangage) autour de l'axe résultant de la rotation précédente appliquée sur l'axe $X_t$.

- puis d'un angle -R ( R : valeur du roulis) autour de l'axe résultant des 2 rotations précédentes, appliquée sur l'axe $Y_t$.
  amène le repère $R_T$ sur le repère $R_{MV}$. Soit $T_0$ cet instant.

Les angles K, T, et R ne sont pas connus. Leur identification est le but du procédé mis en oeuvre.

A différents instants $T_i$, les trois accéléromètres $17_1$, $17_2$, $17_3$ permettent de mesurer l'expression du vecteur « gravité » dans le repère $R_{MV}(T_i)$. L'expression de ce vecteur dans le repère $R_T(T_i)$ est connue - égale à ( 0, 0, -9.8).

L'expression de ce vecteur dans le repère $R_{MV}$ ($T_i$) est calculée en lui faisant subir les rotations suivantes :

- la rotation d'un angle $\alpha$ fonction du temps écoulé entre les instants $T_0$ et $T_i$ $\left( \dfrac{\alpha}{T_i - T_0} \approx 15°/h \right)$

  autour de l'axe des pôles orienté du Sud vers le Nord, c'est à dire autour de l'axe de rotation de la terre et qui n'est fonction dans le repère $R_T$ ($T_0$) ou $R_T(T_i)$ que de la latitude du point P où se trouvent les moyens de visée 10. Dans le cas où les moyens de visée subissent des déplacements importants, de l'ordre de plusieurs kilomètres dans le repère $R_T$ entre les moments ($T_0$) et ($T_i$), les variations de latitude et de longitude des moyens de visée entre ces deux moments sont pris en compte dans les signaux des accéléromètres,

- les rotations d'angles -K, -T, et -R décrites précédemment,

- la rotation qui résulte de l'intégration des incréments d'angles mesurés par les gyromètres.

Toutefois, ce calcul ne peut être effectué entièrement puisque les valeurs de K, T et R ne sont pas connues. Cependant elles sont calculées par un algorithme approprié afin que les expressions calculées et les expressions mesurées par les accéléromètres du vecteur « gravité », à des moments $T_0$, $T_1$ ... $T_i$... $T_n$ ,

soient identiques. L'algorithme utilisé dans cet exemple de réalisation est du type « Downhill Simplex », mais tout autre algorithme peut être utilisé comme, par exemple, la programmation quadratique de Karmakar, More et Toraldo,...

Connaissant K, T et R, le logiciel des moyens de traitement 30 détermine alors, comme précédemment, la position du trièdre formé par les gyroscopes dans le repère terrestre, donc l'attitude des moyens de visée et défini alors les vecteurs de départ de l'intégrale qui permet, lors des déplacements des moyens de visée, de déterminer les vecteurs de position de ces derniers ainsi que son site S et son azimut A.

Par ailleurs, le calcul du vecteur gravité dans le repère $R_{MV}(T_i)$ nécessite la connaissance de la latitude. Cette dernière peut soit être connue, soit déterminée par un système tel par exemple un GPS, soit calculée par les moyens de l'invention. Dans ce dernier cas, le logiciel doit également, et de la même manière que précédemment, en plus des trois paramètres, K, T et R, calculer la latitude L au prix d'une convergence moins rapide.

L'évolution dans le temps de l'expression du vecteur « gravité » dans un repère galiléen est due à la rotation terrestre. Cette méthode revient donc à mesurer l'axe de rotation terrestre de manière dynamique.

Aucune hypothèse n'est faite sur l'attitude des moyens de visée 10 aux différents instants $T_0$ ou $T_i$, Cette méthode ne fait intervenir aucun support de recalage, ni de position de repos. Elle permet donc d'effectuer un recalage algorithmique dit dynamique.

Dans cet exemple de réalisation la périodicité de l'exécution de la fonction de recalage algorithmique était de quelques dizaines de secondes.

Selon une autre variante de réalisation de l'invention, les moyens de recalages comportent au moins deux récepteurs magnétiques disposés non parallèlement sur les moyens de visée et de façon rigide, par exemple à l'aide d'un surmoulage et par au moins un émetteur magnétique basse fréquence dont on a au préalable défini la position dans un repère donné, par exemple un repère lié à cet émetteur.

Afin de définir la position des moyens de visée selon trois axes non parallèles, il est nécessaire d'avoir trois récepteurs magnétiques disposés selon un trièdre et de façon rigide sur les moyens de visée et soit trois émetteurs non juxtaposés soit trois émetteurs ou plus soit un émetteur qui stimule en séquence par exemple trois bobines disposées en trièdre. Les récepteurs magnétiques, en l'occurrence des bobines, génèrent chacun un signal représentatif de l'intensité, de la direction et du sens du champ magnétique basse fréquence qu'ils reçoivent. Ces signaux sont transmis aux moyens de traitement qui les traitent et calculent la position et l'orientation, à savoir l'attitude, des moyens de visée à partir de la cartographie attendue du champ magnétique qui a été au préalable introduite en mémoire dans ces moyens de traitement.

Ces moyens de recalage ont une portée d'une dizaine de mètres et une précision en position de l'ordre du millimètre et une précision angulaire de l'ordre du dixième de degré.

Connaissant la position et l'attitude des moyens de visée dans un repère prédéfini, le recalage des gyroscopes dans ce repère ou dans un repère qui lui est lié peut être réalisé.

Il est à noter que certains gyromètres sont sensibles aux champs magnétiques. Dans ce cas, il est nécessaire de les blinder en disposant une feuille de □métal autour d'eux et/ou de compenser leur dérive due au champ magnétique par un étalonnage et en mettant en mémoire, dans les moyens de traitement, l'évolution de la dérive en fonction de la valeur du champ magnétique et en compensant en permanence la dérive via le logiciel.

Selon un autre mode de réalisation de l'invention, les moyens de recalage comportent au moins une caméra fixée de façon rigide sur les moyens de visée. Cette caméra génère un signal représentatif de l'image observée. Ce signal est traité par des moyens connus de traitement d'image apte à déterminer la position d'un motif dans ladite image. Ce motif peut être constitué par un astre, tel la lune ou le soleil ou une étoile, ou par un paysage ou par des motifs particuliers qui ont été disposés à des endroits dont les coordonnées dans un repère prédéfini ont été déterminées. Chaque fois que le motif recherché est trouvé, ses coordonnées ou son attitude sont transmises aux moyens de traitement et le logiciel effectue un recalage des gyroscopes effectué afin de mettre en concordance les signaux de position émis par les gyromètres avec la position réelle des moyens de visée.

Dans le cas où le motif est constitué par un astre, il est nécessaire d'avoir introduit en mémoire dans les moyens de traitement une cartographie complète des étoiles et des planètes en fonction de l'heure et disposer d'une référence horaire précise

La caméra peut être mobile et lorsqu'un motif a été détecté, un logiciel de poursuite dudit motif peut gérer le déplacement de la caméra afin de conserver le motif au centre de l'image.

Selon une autre variante de réalisation de l'invention, les moyens de recalage sont constitués par au moins deux accéléromètres et préférentiellement trois disposés de façon rigide sur les moyens de visée, par exemple à l'aide d'un surmoulage, et selon un trièdre.

Ces accéléromètres émettent chacun un signal représentatif de l'accélération des moyens de visée qui est transmis aux moyens de traitement des signaux issus des gyroscopes.

Pour effectuer le recalage, il faut connaître la position d'un point, par exemple du paysage, puis dans une première étape, à viser ce point avec les moyens de visée, puis déplacer les moyens de visée, préférablement de quelques mètres, puis dans une deuxième étape à viser de nouveau ledit point.

Les moyens de traitement des signaux issus des gyroscopes étant aptes à déterminer le site S et l'azimut A dudit point dans un repère absolu de référence, la position de ce point est alors déterminée par triangulation à partir des variations d'accélérations générées entre les deux visées et des valeurs de site S et d'azimut A. Connaissant la position exacte dudit point et sa position calculée par triangulation, le recalage des gyroscopes est ensuite réalisé en faisant correspondre la position calculée avec la position réelle dudit point.

Les dérives des gyroscopes dues aux accélérations subies par ces derniers peuvent aussi être compensées à l'aide de ces accéléromètres. Pour cela il suffit d'étalonner les gyroscopes en évaluant leur dérive en fonction de l'accélération puis, en fonctionnement, de faire exécuter aux dits moyens de traitement une correction systématique de la dérive en fonction des accélérations subies par les gyroscopes.

L'utilisation d'accéléromètres en combinaison avec les gyroscopes permet en outre de réaliser deux fonctions complémentaires. La première concerne le calcul de la parallaxe et la seconde, la télémétrie passive. Pour réaliser cette dernière, il suffit de viser un même objectif depuis deux positions différentes, puis, connaissant le site S et l'azimut A de cet objectif à partir des signaux issus des gyroscopes ainsi que la distance entre ces deux positions déterminées de façon connue à partir des signaux des accéléromètres, la distance ainsi que l'attitude de cet objectif sont déterminés par triangulation. Cette désignation d'objectif à l'avantage d'être passive.

Dans toutes les variantes de réalisation décrites précédemment, les moyens de visée et les moyens de traitement des signaux issus des moyens de visée peuvent être portables, leur masse pouvant être inférieure à 5 kg pour permettre une utilisation aisée.

Le calcul de l'attitude se décompose de la manière suivante :

Dans toutes les variantes de réalisation décrites ci-dessus, la mise en mouvement des moyens de visée 10 déclenche l'intégration des trois angles incrémentaux suivant chacun des trois axes liés à ces moyens.

L'attitude du dispositif est donc connue à tout instant.

Toutefois, l'expression de l'attitude des moyens de visée doit être en conformité avec les besoins des moyens extérieurs 60.

Dans ce mode de réalisation, cette mise en conformité nécessite deux étapes.

La première consiste à calculer l'attitude des moyens de visée dans le repère terrestre ou géographique par rapport à un émetteur magnétique ou par rapport à un motif dont la position ne varie pas ou très peu.

La seconde consiste à exprimer l'attitude dans le repère d'exploitation, en l'occurrence le repère du système d'arme.

Ce repère peut être situé à plusieurs dizaines de mètres des moyens de visée, et de ce fait l'erreur de parallaxe peut ne pas être négligeable, notamment si les objets visés sont proches, ces objets pouvant être des nageurs ou des embarcations légères.

Connaissant le besoin opérationnel, on sépare en deux domaines le champ de visée. D'une part, on considère le domaine des sites positifs (ou faiblement négatifs), qui ne peuvent être des buts flottants. Pour ces objets, en l'absence de mesure de distance, une distance forfaitaire d'environ 4 000 mètres est utilisée pour corriger la parallaxe. D'autre part, on considère le domaine des sites négatifs, supposés être des buts flottants. Connaissant l'altitude du dispositif par rapport à la mer, et connaissant le site de visée (mesurée par le dispositif), un calcul trigonométrique simple permet d'estimer la distance de l'objet, et c'est cette distance qui sert de base au calcul des parallaxes.

Par ailleurs, les mouvements de la visée dus aux tremblements de l'opérateur dans un environnement à la fois stressant et perturbé par les mouvements du navire génèrent un bruit dans l'information de visée qui peut en rendre l'exploitation difficile voire impossible.

Pour pallier cet inconvénient, un logiciel de filtrage des données est intégré de façon à stabiliser le signal de sortie. Ce filtrage peut être du type passe-bas ou un filtre de type KALMANN de façon à prendre en compte les évolutions des cibles dans un gabarit donné sans avoir de traîne.

Le mouvement pouvant être assez rapide, et les angles incrémentaux mesurés par le système de mesure assez grands, une modélisation adéquate permet de se ramener dans les conditions précédentes.

Les moyens de visée pouvant comporter un dispositif d'acquisition d'image celui-ci est utilisé dans ce cas pour permettre par stabilisation d'image de filtrer les mouvements parasites, pour permettre par traitement d'image d'identifier l'objectif ou encore par traitement d'image pour calculer la position exacte de la cible par rapport à la visée de l'opérateur.

L'attitude de l'instrument de visée est déterminée par traitement continu. Avant toute désignation d'objectif, et en vue de la mise en oeuvre de la fonction de recalage algorithmique, l'instrument de visée est au repos avec une position connue.

Le logiciel mis en oeuvre par les moyens de traitement 30 a pour mission de traiter les données brutes fournies par l'instrument de visée, dispositif qui permet à l'opérateur des moyens selon l'invention, en visant une cible, de déterminer son site et son azimut.

Ce logiciel réalise les quatre fonctions suivantes :

- la fonction de désignation d'objectif, qui fait l'acquisition des données de l'instrument de visée et les traite afin d'obtenir le site et l'azimut désiré,

- la fonction de transmission qui envoie les données d'azimut - site pour affichage sur les moyens de visualisation et/ou pour commande du système d'arme XX,

- la fonction de positionnement absolu, qui permet de corriger régulièrement la dérive de l'instrument de visée due à l'utilisation de gyromètres.

- la fonction de visualisation de l'état opérationnel des éléments de l'invention.

La fonction de désignation d'objectif a lieu en permanence quand l'instrument de visée est en mode opérationnel, c'est à dire hors de sa position de repos. Il est nécessaire que le temps de traitement des données gyroscopiques soit minimal, par exemple de l'ordre de quelques millisecondes, afin de pouvoir traiter le maximum de données sortant des gyromètres, et ainsi suivre au mieux l'évolution des incréments d'angle et des angles qui s'en déduisent, afin de limiter l'erreur au cours du traitement. En fonction de la taille des incréments d'angles issus des gyromètres, une modélisation est mise en place pour s'affranchir le plus possible des limites de commutativité des rotations dans l'espace.

Les valeurs d'entrée nécessaire à cette fonction sont :

- les incréments d'angles issus des gyromètres : dqx (t), dqy (t), dqz (t),
- u, v, w : vecteurs de position de l'instrument de visée à l'instant t - dt dans le repère absolu du support de repos en to (instant du dernier recalage).

Les valeurs de sortie sont :

- u, v, w : vecteurs de position de l'instrument de visée à l'instant t dans le repère absolu du support de repos en to,

- site S et azimut A dans le repère absolu de référence en t.

L'intégration des données gyrométriques se fait dans le repère absolu du support de repos en to. Au moment de la visée, et de l'appui sur la détente, on termine le traitement en prenant en compte la rotation terrestre qui a été mesurée en sus par les gyromètres depuis le début du traitement. Pour cela on se place dans le repère absolu du support de repos en t, instant de la visée, puis on en déduit le site et l'azimut absolu de l'instrument de visée par rapport au bâtiment.

La correction des données gyrométriques est réalisée comme suit :

Les trois gyromètres fournissent : Sdqx (t), Sdqy (t), Sdqz (t).

On calcule facilement dqx (t), dqy (t), dqz (t) :

dqx (t) = Sdqx (t) - Sdqx (t-dt).

Il en est de même pour dqy (t) et dqz (t).

Après les multiples calibrages automatiques réalisés de façon connue à ce niveau telles la compensation de la dérive des gyromètres en fonction du temps, de la température, du champ magnétique, filtrage du bruit, ... les données notées : dqu (t), dqv (t), dqw (t) sont intégrées suivant la méthode précédemment décrite.

La fonction transmission est très simple, puisqu'elle consiste à envoyer les valeurs calculées de site et l'azimut dans le repère absolu du bâtiment à l'instant t, vers une mémoire et vers le système d'armes et/ou vers les moyens de visualisation pour affichage.

Cette fonction est déclenchée par le passage de l'interrupteur 16 de la position ouverte à la position fermée. Elle s'accompagne de l'émission d'un signal sonore et/ou d'un signal lumineux et de l'affichage d'une information positive sur les moyens de visualisation.

Tant que le logiciel détecte l'état de repos stable de l'organe de visée un recalage algorithmique a lieu périodiquement et les dérives des gyromètres sont analysées tant dans le temps qu'en température. Si, au cours du traitement, le logiciel détecte le début d'un déplacement le recalage en cours est annulé, et les valeurs du recalage algorithmique précédent sont prises en compte.

Les valeurs d'entrée sont :

- la position de l'interrupteur 16,

- les valeurs issues des moyens extérieurs 50,

- la position de l'instrument de visée (Uo, Vo, Wo) dans le repère relatif du bâtiment quand l'instrument de visée est dans le un repère terrestre ou géographique par rapport à un émetteur magnétique ou par rapport à un motif dont la position ne varie pas ou très peu

- K, Rr, Ta : cap, roulis, tangage du bâtiment déterminés lors de la dernière mise en peuvre de la fonction de recalage algorithmique.

Les valeurs de sortie sont :

- to, uo, vo, wo,

- les vecteurs de position de l'instrument de visée à to,

- Du.

Le traitement des données d'entrée est réalisé comme suit :

Les valeurs du cap K, du roulis Rr et du tangage Ta du bâtiment sont acquises.

A l'initialisation du logiciel, les moyens de visée 10 sont au repos et le logiciel des moyens de traitement 30 met en oeuvre le sous-programme de resalage algorithmique des gyromètres. on entre comme paramètre la position du support de repos par rapport au bâtiment. Ceci permet de déterminer la position de l'instrument de visée 10, quand il est au repos, dans le repère terrestre ou géographique par rapport à un émetteur magnétique ou par rapport à un motif dont la position ne varie pas ou très peu relatif du bâtiment.

La fonction visualisation de l'état du système permet de visualiser l'état de certaines fonctions :

- transmissions des gyromètres vers le calculateur,

- transmissions des valeurs issues des moyens extérieurs

- transmission de la détente vers le calculateur,

- transmission du capteur de recalage vers le calculateur.
  ainsi que de certaines valeurs comme le site et l'azimut calculés, les valeurs de cap, roulis , tangage, latitude, ainsi que de l'heure, de l'heure de dernier recalage, de la durée de dernière utilisation depuis le recalage, de la dérive constatée... En outre, dans le cas de l'utilisation d'un capteur électronique d'image, le signal vidéo provenant de ce dernier peut être enregistré, en permanence ou uniquement lors de l'actionnement de l'interrupteur 16 et être affiché sur un moniteur, en même temps que certaines informations telles que la direction de la cible visée, sa distance et sa nature lorsqu'une fonction connue de reconnaissance et/ou d'identification est appliquée au signal vidéo par des moyens de traitement.

Pour tester la réception des informations en provenance des gyromètres, il faut vérifier que les données gyrométriques parviennent bien à l'unité de traitement tous les Dt. Si au bout de 3 Dt, aucune information n'est parvenue à l'unité de traitement, il y a détection d'une anomalie, et passage de 1 à 0 de la variable "transmission des gyromètres".

Pour tester la transmission des valeurs issues des moyens extérieurs, le même principe est utilisé.

Quand la détente est appuyée, il y a fermeture de l'interrupteur 16, et la variable détente passe de 0 à 1 sur l'écran.

De même, lorsque la fonction de recalage algorithmique est mise en oeuvre, la variable recalage passe de 0 à 1 sur l'écran.

La mise en oeuvre des moyens de l'invention est réalisée par un opérateur. Les moyens de visée 10 sont au repos, par exemple posé ou accroché sur un plan quelconque. Lorsque l'opérateur aperçoit une cible, il prend les moyens de visée 10 puis il les pointe, à l'aide de l'organe de visée 13, en direction de la cible et appuie sur l'interrupteur 16 lorsqu'il estime qu'ils sont correctement positionnés par rapport à la cible. Dès lors les moyens 30 calculent le site et l'azimut de la cible et transmettent ces valeurs au système d'arme qui commande l'orientation de l'arme en fonction de ces valeurs et des variations d'attitude du navire à partir de ladite transmission des valeurs, ces variations étant, comme précédemment mentionné, déterminées par les moyens 50.

Immédiatement après la transmission, le tireur peut viser une autre cible et appuyer sur l'interrupteur 16. Les moyens de traitement 30 calculent alors le site et l'azimut de la nouvelle cible et transmettent ces valeurs au système d'arme qui stocke en mémoire lesdites valeurs et peut orienter l'arme vers cette nouvelle cible immédiatement après le tir en direction de la première cible.

Ainsi, le tireur peut viser successivement plusieurs cibles en un minimum de temps, sans être obligé d'attendre la fin de la séquence de tir de l'arme ce qui optimise la durée totale nécessaire aux tirs correspondants et diminue ainsi la vulnérabilité du bateau.

Il permet en outre au tireur de pouvoir réviser une cible dans le cas où le projectile de l'arme ne l'aurait pas atteinte, et ce, alors que le système d'arme est orienté vers une autre cible.

De plus, le tireur peut, après acquisition de la ou des différentes cibles, réaliser des tâches complémentaires ou se déplacer sans que le système d'arme réagisse à ses mouvements.

L'acquisition des gyromètres est faite avec un pas Dt compris entre 5 ms et 50 ms. Ces valeurs sont intégrées et il est connu de modéliser numériquement cette intégration afin d'obtenir des résultats précis, par exemple avec les méthodes de prédiction-correction de type Adams-Moulton-Bashforth, Runge-Kutta ou Burlirsch-Stoer. Cependant, avec des moyens de calcul portables, il n'est pas possible de réaliser des calculs plus complexes en temps réel. L'un des buts de l'invention est de remédier à ce problème en proposant un procédé d'intégration consistant à effectuer successivement, à partir des valeurs gyroscopiques obtenues entre le temps to et le temps t1, des premiers calculs avec une modélisation complexe ne pouvant fonctionner en temps réel mais donnant des résultats précis, puis à partir des valeurs gyroscopiques obtenues entre le temps t1 et le temps t2, des seconds calculs avec une modélisation simplifiée et capable d'être mise en oeuvre en temps réel.

Cette succession d'étapes a l'avantage de pouvoir conduire à des calculs de site et d'azimut en temps réel par rapport à la fermeture de l'interrupteur 16 et, compte tenu de cet objectif, donne des résultats plus précis que utilisation seule de la modélisation complexe ou de la modélisation simplifiée.

Il est évident que pour des raisons d'ergonomie de nombreuses modifications peuvent être apportées au mode de réalisation présenté. Ainsi, l'aspect des moyens de visée sous forme de pistolet peut être remplacé par un aspect fusil (avec ou sans trépied), etc ...

Par ailleurs, les moyens de visée peuvent être appliqués à un casque, comme celui décrit dans le brevet US 4 722 601, à un bandeau ou à des jumelles et le logiciel peut comporter un algorithme auto-adaptatif pour le calcul de la dérive des gyromètres.

Par ailleurs, d'autres moyens peuvent être utilisés avec ceux de l'invention. Ainsi, un système GPS ou équivalent peut être associé aux moyens de traitement afin de pouvoir corroborer les informations de position déterminées à partir des signaux issus des gyroscopes. D'autre part, un télémètre laser peut être utilisé pour déterminer la distance d'un objectif ou corroborer les calculs de positions effectués à partir des signaux provenant des accéléromètres et des gyroscopes.

Par ailleurs, les différentes mesures effectuées (vitesse de rotation terrestre, intensité du champ gravitationnel terrestre, intensité du champ magnétique terrestre, etc.) peuvent être avantageusement utilisées pour vérifier l'état de repos de l'organe de visée ainsi que pour effectuer des corrélations, des calibrages et des contrôles d'erreur.

**Revendications**

1. Dispositif apte à déterminer la direction d'une cible dans un repère prédéfini et du type comportant des moyens de visée (10), comportant un organe de visée (13), trois gyromètres (14$_1$, 14$_2$, 14$_3$) disposés selon trois axes non coplanaires, des moyens de commande (16), des moyens (20) de recalage de ces moyens de visée (10) et des moyens (30) de traitement de signaux issus des moyens de visée (10), ces moyens de traitement (30) étant aptes à déterminer la direction entre les moyens de visée (10) et la cible et à les transmettre à des moyens (40) de visualisation ou à des moyens extérieurs (50,60), ainsi que des moyens (16) de commande de la transmission aux moyens (40) de visualisation ou aux moyens extérieurs (50,60), des valeurs représentatives de la direction entre les moyens de visée (10) et la cible, dispositif **caractérisé en ce que** les moyens de recalage comportent au moins un capteur non gyroscopique (17) disposé sur les moyens de visée (10) et apte à émettre un signal en vue de sa transmission aux dits moyens de traitement (30), les moyens de traitement étant aptes à déterminer l'attitude des moyens de visée dans un repère terrestre à partir des signaux issus desdits gyromètres (14$_1$,14$_2$, 14$_3$) et dudit capteur non gyroscopique.

2. Dispositif selon la revendication 1 **caractérisé en ce que** les moyens de traitement (30) sont aptes à déterminer d'une part la direction d'une droite D1 parallèle à l'axe de rotation de la terre et passant par le point P ou se trouvent les moyens de visée (10) à partir des signaux issus des gyroscopes et d'autre part la direction de la verticale D2 au point P du lieu à partir des signaux issus desdits gyromètres (14$_1$, 14$_2$, 14$_3$) et dudit capteur non gyroscopique (17).

3. Dispositif selon la revendication 1 ou 2 dans lequel les axes du repère terrestre sont la verticale du lieu, le nord géographique et l'est ou l'ouest géographique.

4. Dispositif selon l'une des revendications 1 à 3, **caractérisé en ce que** ledit au moins un capteur est constitué par un inclinomètre deux axes ou par au moins deux inclinomètres.

5. Dispositif selon l'une des revendications 1 à 3, **caractérisé en ce que** ledit au moins un capteur est constitué par un accéléromètre multiaxes ou par au moins deux accéléromètres.

6. Dispositif selon l'une des revendications 1 à 3, **caractérisé en ce que** ledit au moins un capteur est constitué par un capteur électronique d'image.

7. Dispositif selon la revendication 6, **caractérisé en ce que** le capteur électronique d'image est apte à générer un signal représentatif d' images et qui est transmis à des moyens de traitement de ce signal aptes à déterminer la position d'un motif dans ladite image.

8. Dispositif selon la revendication 7, **caractérisé en ce que** des moyens de traitement d'images associés au capteur électronique d'images permettant de compenser le « bougé » de l'opérateur.

9. Dispositif selon l'une des revendications 7 ou 8 **caractérisé en ce que** les moyens de traitement des moyens de visée sont aptes à compenser le bougé de l'opérateur à partir de la valeur du champ optique du capteur électronique d'image.

10. Dispositif selon les revendications 8 et 9, **caractérisé en ce que** les moyens de traitement des moyens de visée sont aptes à déterminer le champ angulaire du capteur électronique d'images à partir de la relation entre le bougé opérateur issu du signal du capteur électronqiue et celui des moyens de visée.

11. Dispositif selon l'une quelconque des revendications 6 à 10, **caractérisé en ce que** les moyens de traitement des moyens de visée sont aptes à générer, à partir des signaux du capteur électronique d'images et des moyens de visée, une image signée.

12. Dispositif selon la revendication 11, **caractérisé en ce que** les moyens de traitement des moyens de visée sont aptes, à partir des images signées, à reconstituer le paysage global, avec des informations de position pour différentes zones de ce dernier.

13. Dispositif selon l'une quelconque des revendications 11 et 12, **caractérisé en ce qu'**il comporte des moyens de visualisation desdites images signées et/ou du paysage reconstitué.

**14.** Dispositif selon l'une quelconque des revendications 1 à 13, **caractérisé en ce que** les moyens de traitement des moyens de visée sont aptes à concourir à la transmission éléments d'identification de la cible et/ou à la détection de la direction absolue des moyens de visée.

**15.** Dispositif selon l'une quelconque des revendications 1 à 14, **caractérisé en ce qu'**il comporte des moyens d'enregistrement du signal provenant du capteur électronique d'image, et/ou qu'il comporte des moyens de visualisation desdites images ainsi que de certaines informations telles que la direction de la cible visée, sa distance et/ou sa nature.

**16.** Dispositif selon l'une des revendications 1 à 3, **caractérisé en ce que** ledit au moins un capteur est constitué par au moins deux récepteurs magnétiques.

**17.** Dispositif selon la revendication 16, **caractérisé en ce qu'**il comporte un émetteur magnétique.

**18.** Dispositif selon l'une quelconque des revendications 1 à 17, **caractérisé en ce qu'**il comporte trois gyromètres optiques, par exemple à fibre optique.

**19.** Dispositif selon l'une quelconque des revendications 1 à 18, **caractérisé en ce que** les moyens de traitement comportent une source d'alimentation électrique et des moyens de calcul et de gestion d'informations mettant en oeuvre un logiciel réalisant plusieurs fonctions.

**20.** Dispositif selon la revendication 19, **caractérisé en ce que** la logiciel réalise trois fonctions principales:

• la fonction de désignation d'objectif, qui fait l'acquisition des données de l'instrument de visée et les traite afin d'obtenir le site et l'azimut désiré,
• la fonction de transmission qui envoie les données d'azimut - site pour affichage sur les moyens de visualisation et/ou à un système d'arme,
• la fonction de détection de la position absolue, qui permet de corriger régulièrement la dérive de l'instrument de visée due à l'utilisation de gyromètres.

**21.** Dispositif selon la revendication 20, **caractérisé en ce que** le logiciel réalise, en outre, une fonction de visualisation de l'état opérationnel des éléments de l'invention.

**22.** Dispositif selon l'une quelconque des revendications 1 à 21, **caractérisé en ce que** les moyens de visée comportent l'acquisition de la position géographique par des moyens radioélectriques de positionnement par exemple satellitaire de type GPS.

**23.** Dispositif selon l'une quelconque des revendications 1 à 22, **caractérisé en ce que** les moyens de visée comportent un télémètre actif.

**24.** Dispositif selon l'une quelconque des revendications 1 à 23, **caractérisé en ce que** les moyens de visée comportent au moins deux accéléromètres et **en ce que** les moyens de traitement comportent des moyens de triangulation aptes à effectuer une télémétrie discrète.

**25.** Procédé de recalage d'un dispositif apte à déterminer la direction d'une cible dans un premier repère prédéfini et du type comportant des moyens de visée (10), comportant un organe de visée (13), trois gyromètres ($14_1$, $14_2$, $14_3$) disposés selon trois axes non coplanaires, et des moyens (30) de traitement de signaux issus des moyens de visée (10), ces moyens de traitement (30) étant aptes à déterminer la direction entre les moyens de visée (10) et la cible), procédé **caractérisé en ce qu'**il comporte une étape dans laquelle les moyens de traitement déterminent, à partir du signal émis par un capteur non gyroscopique (17) disposé sur les moyens de visée (10) et de ceux émis par les gyromètres, l'attitude des moyens de visée dans un second repère prédéfini, le second repère étant un repère terrestre.

**26.** Procédé selon la revendication 25, **caractérisé en ce qu'**il comporte une étape de détermination d'une part de la direction d'une droite D1 parallèle à l'axe de rotation de la terre et passant par le point P où se trouvent les moyens de visée 10 à partir des signaux Issus des gyroscopes et d'autre part de la direction de la verticale D2 au point P du lieu à partir des signaux issus dudit capteur non gyroscopique (17).

**27.** Procédé selon la revendication 26, **caractérisé en ce qu'**il comporte une étape complémentaire de détermination de la direction du nord géographique, cette direction étant obtenue par l'intersection du plan défini par les droites D1 et D2 avec le plan perpendiculaire à D2 et passant par P.

**28.** Procédé selon la revendication 25, pour la mise en oeuvre duquel d'une part les moyens de visée comportent au moins trois capteurs, à savoir trois récepteurs magnétiques, et d'autre part le dispositif comporte un émetteur magnétique, procédé **caractérisé en ce que** les moyens de traitement (30) calculent la position et l'orientation. à savoir l'attitude, des moyens de visée (10) à partir des signaux issus des capteurs magnétiques et de la cartographie attendue du champ magnétique qui a été au préalable introduite en mémoire dans ces moyens de traitement.

29. Procédé selon la revendication 25, pour la mise en oeuvre duquel les moyens de visée comportent un capteur électronique d'image, tel une caméra fixée de façon rigide sur les moyens de visée, cette caméra générant un signal représentatif de l'image observée, procédé **caractérisé en ce qu'**il comporte une étape dans laquelle les moyens de traitement d'image sont aptes à déterminer la position d'un motif dans ladite image, la position de ce motif étant connue.

30. Procédé de recalage selon l'une des revendications 26 ou 27, **caractérisé en ce qu'**il comporte une étape lors de laquelle les moyens de traitement (30) déterminent la valeur du vecteur gravité soit en continu, soit à plusieurs moments $T_0$, $T_1$ .., $T_i$, $T_n$ , à partir du signal provenant dudit capteur (17) non gyroscopique disposé sur les moyens de visée 10.

31. Procédé selon l'une des revendications 25 à 30, **caractérisé en ce qu'**il comporte une étape dans laquelle les moyens de traitement déterminent des angles K, T et R tels que :
étant donné :

- P le point de la surface de la terre où se trouve les moyens de visée.
- $R_T(X_t, Y_t, Z_t)$ un repère associé au point P et lié à la terre, l'axe $X_t$ étant l'axe horizontal Ouest-Est orienté vers l'Est l'axe $Y_t$ horizontal Sud-Nord orienté vers le Nord et l'axe $Z_t$ l'axe vertical orienté vers le haut.
- $R_{MV}$ $(X_s, Y_s, Z_s)$ un repère lié aux moyens de visée (10) intégrant les trois gyromètres ($14_1$, $14_2$, $14_3$) et ledit au moins un capteur non gyroscopique,
les rotations successives d'un angle -K autour de $Z_t$ puis d'un angle -T autour de l'axe résultant de la rotation précédente appliquée sur l'axe $X_t$ puis d'un angle -R autour de l'axe résultant des 2 rotations précédentes, appliquée sur l'axe $Y_t$, amène le repère $R_T$ sur la repère $R_{MV}$.

32. Procédé selon la revendication 31, **caractérisé en ce qu'**il comporte une première étape consistant à calculer l'expression du repère $R_T(T_i)$ dans le repère $R_{MV}(T_i)$ en lui faisant subir les rotations suivantes :

- la rotation d'un angle -α fonction du temps écoulé entre les instants $T_0$ et $T_i$

$$\left(\frac{\alpha}{T_i - T_0} = 15°/h\right) \text{ autour de l'axe des pôles}$$

orienté du Sud vers le Nord, c'est à dire autour de l'axe de rotation de la terre et qui n'est fonction dans le repère $R_T$ $(T_0)$ ou $R_T(T_i)$ que de la latitude du point P où se trouvent les moyens de visée 10,
- les rotations d'angles -K, -T. et -R décrites précédemment,
- la rotation qui résulte de l'intégration des incréments d'angles mesurés par les gyromètres,
puis, dans une deuxième étape, à déterminer les angles K, T, et R, soit par inversion de l'égalisation des expressions calculées et des expressions mesurées du vecteur gravité, soit par minimisation d'une fonction d'erreur, avec un algorithme de recherche du minimum d'une fonction à plusieurs paramètres sur une population de données tel par exemple un algorithme du type descente de simplex, recuit simulé ou par tout autre algorithme comme, par exemple, la programmation quadratique de Karmakar, More et Toraldo,...

33. Procédé selon l'une quelconque des revendications 30 à 32, **caractérisé en ce qu'**il comporte une étape de détermination de la latitude du lieu où se trouvent les moyens de visée.

34. Procédé selon la revendication 32, **caractérisé en ce que** ladite deuxième étape consiste en outre à calculer la latitude L en plus des angles K, T, et R.

## Claims

1. A device capable of determining the direction of a target in a predefined frame of reference and of the type comprising sighting means (10), comprising a sighting member (13), three gyrometers ($14_1$, $14_2$, $14_3$) arranged along three axes in different planes, means for control (16), resetting means (20) for resetting said sighting means (10) and means (30) for processing signals derived from the sighting means (10), these processing means (30) being capable of determining the direction between the sighting means (10) and the target, and of transmitting to imaging means (40) or to external means (50, 60), the device further comprising means (16) for controlling the transmission to the imaging means (40) or to external means (50, 60), of representative values of the direction between the sighting means (10) and the target, the device being **characterized in that** the resetting means comprise at least one non gyroscopic sensor (17) arranged on the sighting means (10) and capable of emitting a signal for its transmission to the said processing means (30), the processing means being capable of determining the attitude of the sighting means in a terrestrial frame of reference, from the signals derived from the said gyrom-

eters ($14_1$, $14_2$, $14_3$) and from the said non gyroscopic sensor.

2. The device as defined in claim 1, wherein the processing means (30) are capable of determining, on the one hand, the direction of a line D1 parallel to the earth's rotation axis and passing through point P where the sighting means (10) are, by processing the signals derived from the gyroscopes, and on the other hand, the direction of the vertical D2 associated to point P, by processing the signals derived from the said gyrometers ($14_1$, $14_2$, $14_3$) and from the said non gyroscopic sensor (17).

3. The device as defined in any one of claim 1 or 2, wherein the axes of the terrestrial frame are at the vertical of the location, geographical north, geographic east or geographic west.

4. The device as defined in any one of claims 1 through 3, wherein the said at least one sensor is composed of one inclinometer with two axes or of at least two inclinometers.

5. The device as defined in any one of claims 1 through 3, wherein the said at least one sensor has one multi-axes accelerometer or at least two accelerometers.

6. The device as defined in any one of claims 1 through 3, wherein the said at least one sensor has one electronic imaging sensor.

7. The device as defined in claim 6, wherein the electronic imaging sensor is capable of generating a representative imaging signal, and which is transmitted to processing means of this signal capable of determining the position of a pattern in the said image.

8. The device as defined in claim 7, wherein the processing means associated to the imaging electronic sensor allow compensating the operator's shake.

9. The device as defined in any one of claims 7 or 8, wherein the processing means of the sighting means are capable of compensating the operator's shake, with the value of the optical field of the electronic imaging sensor.

10. The device as defined in any one of claims 8 and 9, wherein the processing means of the sighting means, are capable of determining the angular field of the electronic imaging sensor from the relationship between the operator's shake derived from the signal of the electronic sensor and the signal of the sighting means.

11. The device as defined in any one of claims 6 through 10, wherein the processing means of the sighting means are capable of generating a signed image from the signals of the electronic image sensor and the sighting means.

12. The device as defined in claim 11, wherein the processing means of the sighting means are capable of reconstituting the global landscape from the signed images, with position information for different zones of the latter.

13. The device as defined in any one of claims 11 and 12, wherein it is constituted by display means of the said signed images and/or of the recomposed landscape.

14. The device as defined in any one of claims 1 through 13, wherein the processing means are capable of participating in the transmission of identification elements of the target and/or in the detection of the absolute direction of the sighting means.

15. The device as defined in any one of claims 1 through 14, wherein it is constituted by recording means of the signal coming from the electronic imaging sensor, and/or it comprises display means of the said images and also of some information such as the direction of the aimed target, its range and/or its nature.

16. The device as defined in any one of claims 1 through 3, wherein the said at least one sensor utilizes at least two electromagnetic receivers.

17. The device as defined in claims 16, wherein it comprises an electromagnetic emitter.

18. The device as defined in any one of claims 1 through 17, wherein it has three optical gyrometers, for example fiber-optic gyrometers.

19. The device as defined in any one of claims 1 through 18, wherein the processing means have a power supply, and calculating and management means using a software program that performs several functions.

20. The device as defined in claim 19, wherein the software program performs three main functions:

    - target designation function, which causes data to be acquired from the sighting instrument and processes them to obtain the desired elevation and azimuth,
    - transmission function, which sends the azimuth and elevation data for display on the imaging means and/or for the purpose of a weapon system,

- absolute position function, which allows correction at regular intervals of the sighting instrument's drift due to the use of gyrometers.

21. The device as defined in claim 20, wherein the software program also performs a display function of the operational status of the invention.

22. The device as defined in any one of claims 1 through 21, wherein the sighting means comprise the acquisition of the geographic position by radio means, such as satellite means of the GPS type.

23. The device as defined in any ane of claims 1 through 22, wherein the sighting means have an active rangefinder.

24. The device as defined in any one of claims 1 through 23, wherein the sighting means have at least two accelerometers and the processing means comprise triangulation means, capable of performing a discreet telemetry.

25. Resetting process of a device capable of determining the direction of a target in a first predefined frame of reference and of the type comprising sighting means (10), comprising a sighting member (13), three gyrometers ($14_1$, $14_2$, $14_3$) arranged along three axes in different planes, and having signal processing means (30) stemming from the sighting means, these processing means being capable of determining the direction between the sighting means (10) and the target, the process being **characterized in that** it includes a step by which the processing means determine by treatment of the signal sent by a non-gyroscopic sensor (17) arranged on the sighting member (10) and of the signals sent by the gyrometers, the attitude of the sighting means in a second predefined frame of reference, this second frame of reference being terrestrial.

26. A process as defined in claim 25, which includes a step of determining, on the one hand the direction of a line D1 parallel to the earth's rotation axis and passing through point P where the sighting means (10) are, by processing the signals derived from the gyroscopes, and on the other hand, the direction of the vertical D2 of the location associated to point P, by processing the signals derived from the said non gyroscopic sensor (17).

27. A process as defined in claim 26, which includes an additional step of determining the geographic north direction, this direction being obtained by the intersection of the plane defined by the D1 and D2 lines with the plane perpendicular to D2 and passing through point P.

28. A process as defined in claim 25, which utilizes on the one hand sighting means comprising at least three sensors, i.e. three electromagnetic receivers, and on the other hand the device comprises an electromagnetic emitter, the process being **characterized in that** the processing means (30) compute the position and the orientation, i.e. the attitude of the sighting means (10) by processing the signals derived from the magnetic sensors and of the cartography of the magnetic field expected, which has been loaded before in the memory of the these processing means.

29. A process as defined in claim 25, which utilizes sighting means composed of an electronic imaging sensor, such as a camera rigidly fastened to the sighting means, this camera generating a signal representative of the image observed, the process being **characterized in that** it uses a step that makes the imaging process capable of determining the position of a pattern in the said image, the position of this pattern being known.

30. A process as defined in any one of claims 26 or 27, wherein the processing means (30) include a step by which they determine the value of the gravity vector either in a continuous process or in a step by step one carrying out the process at $T_0$, $T_1$, $T_l$, $T_n$, of the signals sent by the gyroscopes or the said non gyroscopic sensor (17) arranged on the sighting means (10).

31. A process as defined in any one of claims 26 through 30, wherein it includes a stage of calculation of K, T, and R angles by the processing means, defined as follows:

Knowing that:

- P is the point of the earth surface where the sighting means are,
- $R_T$ ($X_t$, $Y_t$, $Z_t$) is a reference frame associated to point P and connected to the earth, $X_t$ axis being the horizontal West to East axis oriented towards East, $Y_t$ axis being the horizontal South to North axis oriented towards North, and $Z_t$ axis being the vertical axis oriented upwards,
- $R_{MV}$ ($X_s$, $Y_s$, $Z_s$) is a frame of reference connected to the sighting means (10) integrating the three gyrometers ($14_1$, $14_2$, $14_3$) and the said "at least' one non gyroscopic sensor,

the successive rotations of a -K angle about $Z_t$ axis, then of a -T angle about the axis resulting from the previous rotation applied on $X_t$ axis, then of a -R angle about the axis resulting from the two previous rotations, applied on $Y_t$ axis, put the frame of reference $R_T$ on the $R_{MV}$ frame of reference.

**32.** A process as defined in claim 31, wherein in a first step it computes the expression of the $R_T (T_i)$ frame of reference into the $R_{MV} (T_i)$ frame of reference, through the implementation of the following rotations:

- the rotation of a $-\alpha$ angle, which is a function of the elapsed time between instants $T_0$ and $T_i$ $\left( \dfrac{\alpha}{T_i - T_0} = 15°/h \right)$ about the pole axis oriented from the South to North, i.e. around the rotation axis of the earth, and which is only a function of point P latitude where the sighting means (10) are, in the frame of reference $R_T(T_0)$ or $R_T(T_i)$,
- the rotations of -K, -T, and -R angles previously mentioned,
- the rotation which results from the integration of the incremental angles measured by the gyrometers,

and wherein, in a second stage, it determines K, T, and R angles, either by an inversion process of the equalization made of the computed and of the measured values of the gravity vector, or by a minimization process of the error function, by use of an algorithm aimed to seek the minimum value of a function of many parameters calculated on a sample of data, for example, by the use of an algorithm of simple down hill type or of simulated annealing type, or by the use of any one of dedicated algorithms, such as quadratic programming of Karmakar, More and Toraldo.

**33.** A process as defined in any one of claims 30 through 32, wherein it comprises a step for determination of the latitude of the place where the sighting means are.

**34.** A process as defined in claim 32, wherein the said second step consists in computing latitude L as a complement of K, T and R angles.

**Patentansprüche**

**1.** Vorrichtung, die zur Bestimmung der Richtung eines Ziels in einer vordefinierten Markierung geeignet ist und vom dem Typ, umfassend Mittel zum Anvisieren (10), umfassend ein Organ zum Anvisieren (13), drei Gyrometer ($14_1$, $14_2$, $14_3$), die gemäß drei nicht koplanaren Achsen angeordnet sind, Steuermittel (18), Einstellmittel (20) dieser Mittel zum Anvisieren (10) und Verarbeitungsmittel (30) von Signalen, die aus Mitteln zum Anvisieren (10) stammen, wobei diese Verarbeitungsmittel (30) geeignet sind, die Richtung zwischen den Mitteln zum Anvisieren (10) und dem Ziel zu bestimmen und sie auf Anzeigemittel (40) oder auf äußere Mittel (50, 60) zu übertragen, sowie Steuermittel (16) der Übertragung auf Anzeigemittel (40) oder auf äußere Mittel (50, 60), Werte, die die Richtung zwischen den Mitteln zum Anvisieren (10) und dem Ziel darstellen, wobei die Vorrichtung **dadurch gekennzeichnet ist, dass** die Einstellmittel wenigstens einen nicht gyroskopischen Sensor (17) umfassen, der auf den Mitteln zum Anvisieren (10) angeordnet ist und geeignet ist, ein Signal zu seiner Übertragung auf die genannten Verarbeitungsmittel (30) zu senden, wobei die Verarbeitungsmittel geeignet sind, die Haltung der Mittel zum Anvisieren in einer terrestrischen Markierung ausgehend von Signalen zu bestimmen, die aus den genannten Gyrometern ($14_1$, $14_2$, $14_3$) und dem genannten nicht gyroskopischen Sensor stammen.

**2.** Vorrichtung gemäß Anspruch 1, **dadurch gekennzeichnet, dass** die Verarbeitungsmittel (30) geeignet sind, einerseits die Richtung einer Geraden D1, die parallel zur Rotationsachse der Erde und durch den Punkt P verläuft, in dem sich die Mittel zum Anvisieren (10) ausgehend von Signalen befinden, die aus den Gyroskopen stammen, und andererseits die Richtung der Vertikalen D2 an dem Punkt P des Ortes, ausgehend von den Signalen zu bestimmen, die aus den genannten Gyrometern ($14_1$, $14_2$, $14_3$) und dem genannten nicht gyroskopischen Sensor (17) stammen.

**3.** Vorrichtung gemäß Anspruch 1 oder 2, in dem die Achsen der terrestrischen Markierung die Vertikale des Ortes, der geographische Norden und der Osten oder der geographische Westen sind.

**4.** Vorrichtung gemäß Anspruch 1 bis 3, **dadurch gekennzeichnet, dass** wenigstens ein Sensor aus einem Neigungsmesser mit zwei Achsen oder aus wenigstens zwei Neigungsmessern gebildet wird.

**5.** Vorrichtung gemäß Anspruch 1 bis 3, **dadurch gekennzeichnet, dass** der genannte wenigstens eine Sensor aus einem Beschleunigungsmesser mit mehreren Achsen oder aus wenigstens zwei Beschleunigungsmessern gebildet wird.

**6.** Vorrichtung gemäß Anspruch 1 bis 3, **dadurch gekennzeichnet, dass** der genannte wenigstens eine Sensor aus einem elektronischen Bildsensor gebildet wird.

**7.** Vorrichtung gemäß Anspruch 6, **dadurch gekennzeichnet, dass** der elektronische Bildsensor geeignet ist, ein Bilder darstellendes Signal zu generieren und das auf Verarbeitungsmittel dieses Signals übertragen wird, die geeignet sind, die Position eines Motivs in dem genannten Bild zu bestimmen.

8. Vorrichtung gemäß Anspruch 7, **dadurch gekennzeichnet, dass** Bildverarbeitungsmittel, die dem elektronischen Bildsensor zugeordnet sind, den Ausgleich der "Bewegung" des Operators erlauben.

9. Vorrichtung gemäß Anspruch 7 oder 8, **dadurch gekennzeichnet, dass** die Verarbeitungsmittel der Mittel zum Anvisieren geeignet sind, die Bewegung des Operators ausgehend von dem Wert des optischen Feldes des elektronischen Bildsensors auszugleichen.

10. Vorrichtung gemäß Anspruch 8 und 9, **dadurch gekennzeichnet, dass** die Verarbeitungsmittel der Mittel zum Anvisieren geeignet sind, das winkelförmige Feld des elektronischen Bildsensors ausgehend von der Relation zwischen der Bewegung des Operators, die aus dem Signal des elektronischen Sensors stammt, und des der Mittel zum Anvisieren zu bestimmen.

11. Vorrichtung gemäß Anspruch 6 bis 10, **dadurch gekennzeichnet, dass** die Verarbeitungsmittel der Mittel zum Anvisieren geeignet sind, ausgehend von Signalen des elektronischen Bildsensors und der Mittel zum Anvisieren ein unterzeichnetes Bild zu generieren.

12. Vorrichtung gemäß Anspruch 11, **dadurch gekennzeichnet, dass** die Verarbeitungsmittel der Mittel zum Anvisieren geeignet sind, ausgehend von unterzeichneten Bildern die globale Landschaft mit Positionsinformationen für unterschiedliche Bereiche derselben nachzubilden.

13. Vorrichtung gemäß Anspruch 11 und 12, **dadurch gekennzeichnet, dass** sie Anzeigemittel der genannten unterzeichneten Bilder und / oder der nachgebildeten Landschaft umfasst.

14. Vorrichtung gemäß Anspruch 1 bis 13, **dadurch gekennzeichnet, dass** die Verarbeitungsmittel der Mittel zum Anvisieren geeignet sind, zur Übertragung von Identifikationselementen des Ziels und / oder der Feststellung der absoluten Richtung der Mittel zum Anvisieren beizutragen.

15. Vorrichtung gemäß Anspruch 1 bis 14, **dadurch gekennzeichnet, dass** sie Registrierungsmittel des Signals umfasst, das aus dem elektronischen Sensor stammt, und / oder dass sie Anzeigemittel der genannten Bilder sowie bestimmter Informationen umfasst, wie z. B.. die Richtung des anvisierten Ziels, seine Entfernung und / oder seine Art.

16. Vorrichtung gemäß Anspruch 1 bis 3, **dadurch gekennzeichnet, dass** der genannte, wenigstens eine Sensor aus wenigstens zwei magnetischen Empfängern gebildet wird.

17. Vorrichtung gemäß Anspruch 16, **dadurch gekennzeichnet, dass** sie einen magnetischen Sender umfasst.

18. Vorrichtung gemäß Anspruch 1 bis 17, **dadurch gekennzeichnet, dass** sie drei optische Gyrometer, z. B. Glasfasergyrometer, umfasst.

19. Vorrichtung gemäß Anspruch 1 bis 18, **dadurch gekennzeichnet, dass** die Verarbeitungsmittel eine Stromversorgungsquelle und Berechnungs- und Verwaltungsmittel von Informationen umfassen, die eine Software umsetzen, welche mehrere Funktionen realisiert.

20. Vorrichtung gemäß Anspruch 19, **dadurch gekennzeichnet, dass** die Software drei Hauptfunktionen realisiert:

 * Die Funktion zur Bezeichnung von Zielen, die die Erfassung der Daten des Instruments zum Anvisieren übernimmt und sie verarbeitet, um den Standort und den gewünschten Azimut zu erhalten,
 * Die Übertragungsfunktion, die die Azimut-Standortdaten zur Anzeige auf den Anzeigemittel und / oder einem Waffensystem versendet,
 * Die Funktion zum Feststellen der absoluten Position, die die regelmäßige Korrektur der auf die Verwendung des Gyrometers zurückzuführende Abweichung des Instruments zum Anvisieren erlaubt.

21. Vorrichtung gemäß Anspruch 20, **dadurch gekennzeichnet, dass** die Software darüber hinaus eine Funktion zum Anvisieren des Betriebszustandes der Elemente der Erfindung realisiert.

22. Vorrichtung gemäß Anspruch 1 bis 21, **dadurch gekennzeichnet, dass** die Mittel zum Anvisieren die Erfassung der geographischen Position durch funkelektrische Positionierungsmittel, z. B. Satellitenmittel vom Typ GPS, umfassen.

23. Vorrichtung gemäß Anspruch 1 bis 22, **dadurch gekennzeichnet, dass** die Mittel zum Anvisieren einen aktiven Telemeter umfassen.

24. Vorrichtung gemäß Anspruch 1 bis 23, **dadurch gekennzeichnet, dass** die Mittel zum Anvisieren wenigstens zwei Beschleunigungsmesser umfassen und dass die Verarbeitungsmittel Triangulierungsmittel umfassen, die geeignet sind, eine diskrete Triangulierung durchzuführen.

25. Einstellverfahren einer Vorrichtung, die geeignet ist, die Richtung eines Ziels in einer ersten vordefinierten Markierung zu bestimmen und von dem Typ, umfassend Mittel zum Anvisieren (10), umfassend ein erstes Organ zum Anvisieren (13), drei Gyrometer ($14_1$, $14_2$, $14_3$), die gemäß drei nicht koplanaren Achsen angeordnet sind, und Verarbeitungsmittel (30) von Signalen, die aus Mitteln zum Anvisieren (10) stammen, wobei diese Verarbeitungsmittel (30) geeignet sind, die Richtung zwischen den Mitteln zum Anvisieren (10) und dem Ziel zu bestimmen, wobei das Verfahren **dadurch gekennzeichnet, ist, dass** es eine Stufe umfasst, in der die Verarbeitungsmittel ausgehend von dem Signal, das durch einen gyroskopischen Sensor (17) gesendet wird, welcher auf den Mitteln zum Anvisieren (10) angeordnet ist und von denen, die von den Gyrometern gesendet werden, die Haltung der Mittel zum Anvisieren in einer zweiten vordefinierten Markierung bestimmen, wobei die zweite Markierung eine terrestrische Markierung ist.

26. Verfahren gemäß Anspruch 25, **dadurch gekennzeichnet, dass** es eine Stufe zur Bestimmung einerseits der Richtung einer Geraden D1, die parallel zur Rotationsachse der Erde und durch den Punkt P verläuft, in dem sich die Mittel zum Anvisieren 10 befinden, ausgehend von den Signalen, die aus den Gyroskopen stammen, und andererseits der Richtung der Vertikalen D2 am Punkt P des Ortes ausgehend von Signalen, die von dem genannten nicht gyroskopischen Sensor (17) stammen, umfasst.

27. Verfahren gemäß Anspruch 26, **dadurch gekennzeichnet, dass** es eine komplementäre Stufe zur Bestimmung der Richtung des geographischen Nordens umfasst, wobei diese Richtung durch die Schnittlinie der Ebene, die durch die Geraden D1 und D2 erhalten wird, mit der lotrechten Ebene zu D2, die durch P verläufe, erhalten wird.

28. Verfahren gemäß Anspruch 25, für dessen Ümsetzung einerseits die Mittel zum Anvisieren wenigstens drei Sensoren umfassen, und zwar drei magnetische Empfänger, und andererseits die Vorrichtung einen magnetischen Sender umfasst, wobei das Verfahren **dadurch gekennzeichnet ist, dass** die Vierarbeitungsmittel (30) die Position und die Ausrichtung berechnen, und zwar die Haltung der Mittel zum Anvisieren (10) ausgehend von Signalen, die aus magnetischen Sensoren und der erwarteten Kartographie des magnetischen Feldes stammen, das zuvor in den Speicher dieser Verarbeitungsmittel eingegeben wurde.

29. Verfahren gemäß Anspruch 25, für dessen Umsetzung die Mittel zum Anvisieren einen elektronischen Bildsensor umfassen, wie z. B. eine steif auf den Mitteln zum Anvisieren angebrachte Kamera, wobei diese Kamera ein Signal generiert, das das beobachtete Bild darstellt, wobei das Verfahren **dadurch gekennzeichnet** wird, dass es eine Stufe umfasst, in der die Bildverarbeitungsmittel geeignet sind, die Position eines Motivs in dem genannten Bild zu bestimmen, wobei die Position dieses Motivs bekannt ist.

30. Einstellverfahren gemäß Anspruch 26 oder 27, **dadurch gekennzeichnet, dass** es eine Stufe umfasst, bei der die Verarbeitungsmittel (30) den Wert des Gravitätsvektors entweder kontinuierlich oder zu mehreren Momenten $T_0$, $T_1$, $T_i$, ..., $T_n$ ausgehend von dem Signal bestimmen, das aus dem genannten nicht gyroskopischen, auf den Mitteln zum Anvisieren (10) angeordneten Sensor (17) stammt.

31. Verfahren gemäß Anspruch 25 bis 30, **dadurch gekennzeichnet, dass** es eine Stufe umfasst, in der die Verarbeitungsmittel Winkel K, T und R bestimmen, wie z. B.: Da:

    - P der Punkt der Oberfläche der Erde ist, in dem sich die Mittel zum Anvisieren befinden,
    - $R_T$ ($X_t$, $Y_t$, $Z_t$) eine Markierung ist, die dem Punkt P zugeordnet ist und mit der Erde der verbunden ist, wobei die Achse $X_t$ die horizontale, nach Osten ausgerichtete Achse Westen-Osten ist, die Achse $Y_t$ die horizontale, nach Norden ausgerichtete Achse Süden-Norden ist und die Achse $Z_t$ die nach oben ausgerichtete vertikale Achse ist.
    - $R_{MV}$ ($X_s$, $Y_s$, $Z_s$) eine Markierung ist, die mit den Mitteln zum Anvisieren (10) verbunden ist, die die drei Gyrometer ($14_1$, $14_2$, $14_3$) und den genannten wenigstens einen nicht gyroskopischen Sensor beinhalten.
    die sukzessiven Rotationen eines Winkels -K um $Z_t$, dann einen Winkel -T um die Achse, die aus der vorherigen Rotation resultieren, die auf die Achse $X_t$ angewendet wird, dann einen Winkel -R um die Achse, der aus den 2 vorherigen Rotationen resultiert, die auf die Achse $Y_t$ angewendet wird,
    führt die Markierung $R_t$ auf die Markierung $R_{Mv}$.

32. Verfahren gemäß Anspruch 31, **dadurch gekennzeichnet, dass** es eine erste Stufe umfasst, die in der Berechnung des Ausdrucks der Markierung $R_t$ ($T_i$) in der Markierung $R_{MV}$ ($T_1$) besteht, in dem sie den folgenden Rotationen unterzogen wird:

    - der Rotation eines Winkels $-\alpha$ in Abhängigkeit von der zwischen den Augenblicken $T_0$ und $T_1$

abgelaufenen Zeit $\left(\dfrac{\alpha}{T_i - T_0} = 15°/h\right)$ um die Achse der Pole, die von Süden nach Norden ausgerichtet ist, d. h. um die Rotationsachse der Erde, und die nur eine Funktion in der Markierung $R_t$ ($T_0$) oder $R_t$ ($T_i$) des Breitengrades des Punktes P ist, in dem sich die Mittel zum Anvisieren 10 befinden,

- den zuvor beschriebenen Winkelrotationen -K, -T und -R,

- der Rotation, die aus der Integration der Winkelinkremente resultiert, die durch die Gyrometer gemessen wird,

dann, in einer zweiten Stufe, der Bestimmung der Winkel K, T und R, entweder per Inversion der Egalisierung der berechneten Ausdrücke und der gemessenen Ausdrükke des Gravitätsvektors oder per Minimierung einer Fehlerfunktion mit einem Forschungsalgorxthmus des Minimums einer Funktion mit mehreren Parametern auf einer Datenpopulation, wie z. B. einem Algorithmus vom Typ Simplex-Algorithmus, simuliertes Tempern oder durch jeden anderen Algorithmus, wie z. B. die quadratische Programmierung nach Kamakar, More und Toraldo, usw.

**33.** Verfahren gemäß Anspruch 30 bis 32, **dadurch gekennzeichnet, dass** es eine Stufe zur Bestimmung des Breitengrades des Ortes umfasst, an dem sich die Mittel zum Anvisieren befinden.

**34.** Verfahren gemäß Anspruch 32, **dadurch gekennzeichnet, dass** die genannte zweite Stufe darüber hinaus in der Berechnung des Breitengrades L, zuzüglich zu den Winkeln K, T und R besteht.

FIG.1

$14_1$

$14_2$

$14_3$

13

$17_1$

16

FIG.2

$14_1$

$14_2$

$14_3$

13

$17_2$

$17_3$

16

FIG.3

$17_4$

## RÉFÉRENCES CITÉES DANS LA DESCRIPTION

### Documents brevets cités dans la description

- EP 5575591 A
- US 4012989 A
- FR 2536936
- EP 0484202 A
- WO 9831985 A
- EP 717264 A
- EP 496172 A
- US 4722601 A